## Europäisches Patentamt

## European Patent Office

## Office européen des brevets

(11) Veröffentlichungsnummer: **0 307 389**
**B1**

(12) # EUROPÄISCHE PATENTSCHRIFT

(45) Veröffentlichungstag der Patentschrift:
**08.08.90**

(51) Int. Cl.⁵: **F16D 25/10, F16D 25/12**

(21) Anmeldenummer: **88890224.4**

(22) Anmeldetag: **01.09.88**

(54) **Kupplungsvorrichtung für Lastschaltgetriebe.**

(30) Priorität: **10.09.87 AT 2297/87**

(43) Veröffentlichungstag der Anmeldung:
**15.03.89 Patentblatt 89/11**

(45) Bekanntmachung des Hinweises auf die Patenterteilung:
**08.08.90 Patentblatt 90/32**

(84) Benannte Vertragsstaaten:
**DE FR GB IT**

(56) Entgegenhaltungen:
**DE-B- 1 264 887**
**GB-A- 2 001 713**
**US-A- 3 834 503**

(73) Patentinhaber: **STEYR-DAIMLER-PUCH Aktiengesellschaft, Postfach 62 Franz-Josefs-Kai 51, A-1011 Wien(AT)**

(72) Erfinder: **Gartner, Helfried, A-3321 Ardagger Markt 108(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Kupplungsvorrichtung für Lastschaltgetriebe, bestehend aus zwei druckmittelbetätigbaren Lamellenkupplungen mit kühlmittelversorgten Lamellen, von welchen Lamellenkupplungen durch eine Druckmittelbeaufschlagung die eine gegen die Kraft einer Kupplungsfeder öffnet und die andere gegen die Kraft einer Ausrückfeder schließt, wobei zur Druckmittelbeaufschlagung und Kühlmittelversorgung über Druck- und Kühlmittelzuleitungen der auf einer gemeinsamen Antriebswelle sitzenden Lamellenkupplungen Versorgungsbohrungen und eine diesen zugeordnete Steuerungseinrichtung in der Antriebswelle vorgesehen sind.

Bei Lastschaltgetrieben mit Lamellenkupplungen ist es aufgrund der heutigen hohen Leistungsanforderungen und Schalthäufigkeiten notwendig, die Lamellen nicht nur zu schmieren, sondern vor allem auch zu kühlen, so daß ein eigener, für die Schmierung und Kühlung verantwortlicher Kühlmittelkreislauf aufrechterhalten wird. Um allerdings die Restmomente der jeweils geöffneten Kupplung zu senken und damit die Laufverluste zu vermindern, bleiben die offenen Kupplungen ohne Kühlmittelversorgung und nur die eingerückten Kupplungen werden kühlmittelbeaufschlagt. Das verlangt bei den wechselweise betätigbaren Lamellenkupplungen eine entsprechende Steuerungseinrichtung für den Kühlmittelstrom, der in Abhängigkeit von der Kupplungsbetätigung ebenfalls wechselweise der einen oder anderen Lamellenkupplung zugeführt werden muß, wobei die bekannten Steuerungseinrichtung, wie die US-PS 3 834 503 zeigt, außerhalb des durch die Antriebswelle und die Kupplungsvorrichtung bestehenden Antriebssystems liegen, aufwendige Ventile erfordern und wegen ihrer Funktionsträgheit nicht den gewünschten Erfolg mit sich bringen.

Der Erfindung liegt daher die Aufgabe zugrunde, diese Mängel zu beseitigen und eine Kupplungsvorrichtung der eingangs geschilderten Art zu schaffen, die sich durch ihren besonders einfachen Aufbau, ihre exakte Wirkung und ihre Funktionssicherheit auszeichnet.

Die Erfindung löst diese Aufgabe dadurch, daß die Antriebswelle als Steuerungseinrichtung im Bereich der Druck- und Kühlmittelzuleitungen einen einerends druckmittelbeaufschlagbaren Zylinderraum und andernends kühlmittelbeaufschlagbaren Zylinderraum zur Aufnahme eines anschlagbegrenzt hin- und herschiebbaren Steuerkolbens aufweist, der über Steuerkanäle od. dgl. die Kühlmittelzuleitung bzw. den kühlmittelbeaufschlagten Zylinderraum in seiner kühlmittelseitigen Endlage an die Versorgungsbohrung für die im Schließsinn druckmittelbetätigbare Lamellenkupplung und in seiner druckmittelseitigen Endlage an die Versorgungsbohrung für die im Öffnungssinn durckmittelbetätigbare Lamellenkupplung anschließt. Dieser einerseits druckmittel- anderseits kühlmittelbeaufschlagte Steuerkolben arbeitet schnell und zuverlässig, wobei es nur auf seine Endstellungen, nicht aber auf seine Drehlage ankommt. Es entsteht eine aufwandsarme, unmittelbar von der Kupplungsbetätigung durch die Druckmittelbeaufschlagung abhängige Steuerungseinrichtung, die aufgrund ihrer Anordnung innerhalb der Antriebswelle rationell untergebracht werden kann und vor allem durch ihre Nähe zu den Lamellenkupplungen für diese praktisch verzögerungsfrei wirksam ist. Wird die Kupplungsvorrichtung durch eine Druckmittelbeaufschlagung betätigt, bewegt sich aufgrund der Druckmittelbeaufschlagung der Steuerkolben in die kühlmittelseitige Endlage und das Kühlmittel strömt nur der durch die Druckmittelbeaufschlagung eingerückten Lamellenkupplung zu. Fehlt zum Ausrücken dieser Kupplung der Arbeitsdruck des Druckmittels, kann der gegenüber diesem Arbeitsdruck geringere Kühlmitteldruck nun den Steuerkolben in seine andere Endlage bringen und das Kühlmittel strömt in die andere, bei fehlender Druckmittelbeaufschlagung durch die Kupplungsfeder eingerückten Lamellenkupplung. Da in den Endlagen jeweils nur die eine Versorgungsbohrung mit der Kühlmittelzuleitung in Verbindung steht, wird jeweils die andere automatisch geschlossen und die jeweils geöffnete Lamellenkupplung bleibt unversorgt. Sollte bei zu geringem Druck des Kühlmittelkreislaufes eine zu langsame Rückbewegung des Steuerkolbens zu befürchten sein, kann selbstverständlich der Steuerkolben zur Unterstützung der Kühlmittelbeaufschlagung durch eine zusätzliche Kupplungsfeder belastet werden.

Eine besonders einfache und zweckmäßige Konstruktion ergibt sich, wenn erfindungsgemäß eine stirnseitig offene Sackbohrung an einem Wellenende den Zylinderraum bildet und die Druckmittelzuleitung in eine Stirnkammer des diesem Wellenende zugordneten Wellenlagers mündet. Dadurch sind nur schwierigkeitslos herzustellende und gut zugängliche Bohrungen und Dichtungen erforderlich und die Steuerungseinrichtung läßt sich mit wenigen Handgriffen einbauen.

In der Zeichnung ist der Erfindungsgegenstand anhand eines Ausführungsbeispieles rein schematisch veranschaulicht und zwar zeigen

Fig 1 eine erfindungsgemäße Kupplungsvorrichtung im Axialschnitt nach der Linie I-I der Fig. 2, wobei das die Steuerungseinrichtung aufnehmende Wellenende vergrößert und mit den beiden Endlagen des Steuerkolbens veranschaulicht ist, und

Fig. 2 einen Querschnitt nach der Linie II-II der Fig. 1.

Eine nur angedeutete Kupplungsvorrichtung 1 für ein Lastschaltgetriebe besteht aus zwei druckmittelbetätigbaren Lamellenkupplungen 2, 3, wobei die eine Lamellenkupplung 2 durch die Druckmittelbeaufschlagung ihres Betätigungskolbens 4 eingerückt und die andere Lamellenkupplung 3 gleichzeitig über ihren Betätigungskolben 5 gegen die Kraft einer Kupplungsfeder 6 geöffnet wird. Der Zylinderraum 7 zwischen den beiden Betätigungskolben 4, 5 steht dazu mit einer Druckmittelbohrung 8 der gemeinsamen Antriebswelle 9 in Verbindung.

Um die Kupplungsvorrichtung 1 kühlen und schmieren zu können, gibt es einen nur mit seinen Zuführungen angedeuteten Kühlmittelkreislauf, der eigene Versorgungsbohrungen 10, 11 in der Antriebswelle 9 für die Lamellenkupplungen 2 und 3 umfaßt. Zum Senken der Blindmomente und Laufverluste wird immer nur die gerade eingerückte Kupplung kühlmittelversorgt, die ausgerückte hingegen bleibt ohne Kühlmittelzufuhr, um das durch ein Haften des Kühlmittels zwischen den Lamellen bedingte Restmoment zu verringern, wobei eine Steuerungseinrichtung 12 den Kühlmittelstrom zur wechselweisen Beaufschlagung der Lamellenkupplungen 2, 3 in Abhängigkeit von der Druckmittelbetätigung der Kupplungsvorrichtung 1 steuert.

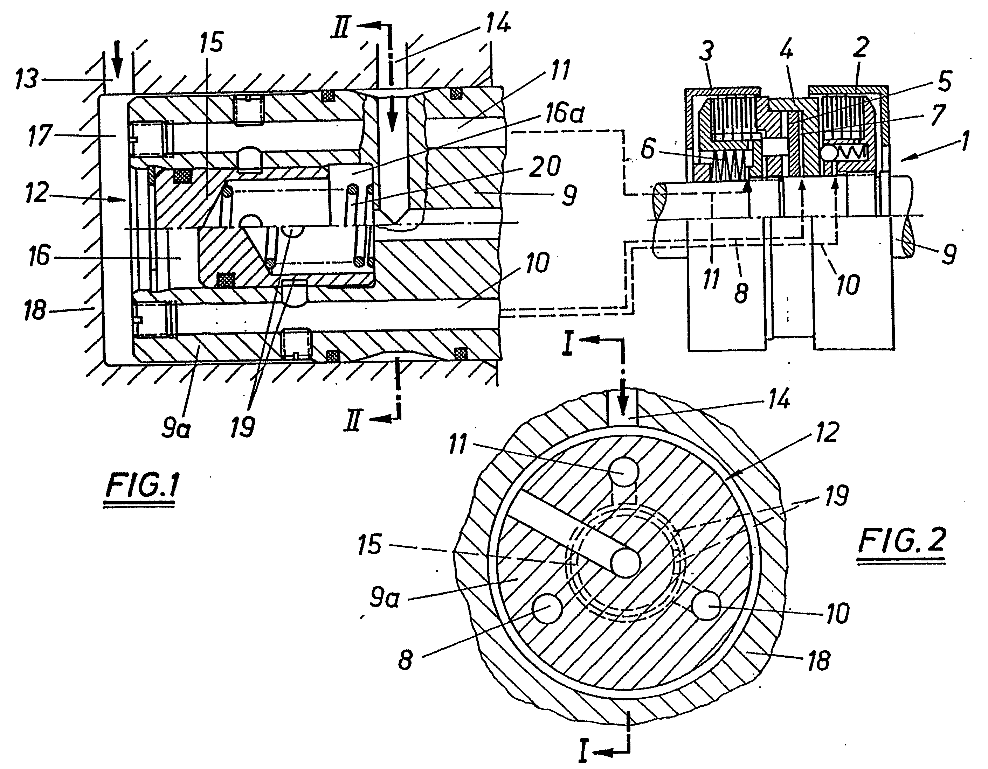

Die Steuereinrichtung 12 ist im Bereich der Druckmittelzuleitung 13 und der Kühlmittelzuleitung 14 innerhalb des Wellenendes 9a vorgesehen und besteht aus einem Steuerkolben 15, der anschlagbegrenzt hin- und herschiebbar in einem Zylinderraum 16 des Wellenendes 9a sitzt. Der Zylinderraum 16 schließt wellenseitig an die Kühlmittelzuleitung 14 an und geht an der freien Stirnseite in eine Stirnkammer 17 des Wellenlagers 18 über, in die die Druckmittelzuleitung 13 mündet. Der Steuerkolben 15 weist Steuerkanäle 19 auf, mit denen er den kühlmittelbeaufschlagten Zylinderraumabschnitt 16 a in seiner druckmittelseitigen Endlage (obere Hälfte in Fig. 1) mit der Versorgungsbohrung 11 und in seiner kühlmittelseitigen Endlage (untere Hälfte in Fig. 1) mit der Versorgungsbohrung 10 verbindet.

Gibt es keine Druckmittelbeaufschlagung, ist der Kühlmitteldruck im Zylinderraumabschnitt 16a, der durch eine Kolbenfeder 20 unterstützt sein kann, groß genug, um den Steuerkolben 15 in seine druckmittelseitige Endlage zu bringen. Kühlmittel kann daher durch die Kühlmittelzuleitung 14, den kühlmittelseitigen Zylinderraumabschnitt 16a und die Steuerbohrungen 19 in die Versorgungsbohrung 11 strömen, durch die es der Lamellenkupplung 3 zufließt, die bei fehlender Druckmittelbeaufschlagung über die Kupplungsfeder 6 eingerückt ist. Die Versorgungsbohrung 10 ist unterbrochen und die ausgerückte Lamellenkupplung 2 bleibt ohne Kühlmittelversorgung. Wird nun die Kupplungsvorrichtung 1 durch eine Druckmittelbeaufschlagung betätigt, erhöht sich der Druckmitteldruck in der Stirnkammer 17 und gleichzeitig mit der Druckmittelbeaufschlagung des Zylinderraumes 7 in der Kupplungsvorrichtung 1 über die Druckmittelbohrung 8 wird der Steuerkolben 15 in seine kühlmittelseitige Endlage verschoben und verbindet den kühlmittelseitigen Zylinderraumabschnitt 16a über die Steuerbohrungen 19 mit der Versorgungsleitung 10, die nun die bei Druckmittelbeaufschlagung eingerückte Lamellenkupplung 2 mit Kühlmittel versorgt. In diesem Falle ist die Versorgungsbohrung 11 geschlossen und die Lamellenkupplung 3 bleibt ohne Kühlmittelversorgung.

Durch die erfindungsgemäße Steuerungseinrichtung kommt es zu einer einfachen, reaktionsschnellen und funktionssicheren Steuerung der Kühlmittelversorgung für die Lamellenkupplungen 2 und 3 in Abhängigkeit von der Druckmittelbetätigung der Kupplungsvorrichtung 1.

## Patentansprüche

1. Kupplungsvorrichtung (1) für Lastschaltgetriebe, bestehend aus zwei druckmittelbetätigbaren Lamellenkupplungen (2, 3) mit kühlmittelversorgten Lamellen, von welchen Lamellenkupplungen durch eine Druckmittelbeaufschlagung die eine (3) gegen die Kraft einer Kupplungsfeder (6) öffnet und die andere (2) gegen die Kraft einer Ausrückfeder schließt, wobei zur Druckmittelbeaufschlagung und Kühlmittelversorgung über Druck- und Kühlmittelzuleitungen (13, 14) der auf einer gemeinsamen Antriebswelle (9) sitzenden Lamellenkupplungen (2, 3) Versorgungsbohrungen 10, 11 und eine diesen zugeordnete Steuerungseinrichtung in der Antriebswelle (9) vorgesehen sind, dadurch gekennzeichnet, daß die Antriebswelle (9) als Steuerungseinrichtung (12) im Bereich der Druck- und Kühlmittelzuleitungen (13, 14) einen einerends druckmittelbeaufschlagbaren Zylinderraum (16) und andernends kühlmittelbeaufschlagbaren Zylinderraum (16a) zur Aufnahme eines anschlagbegrenzt hin- und herschiebbaren Steuerkolbens (15) aufweist, der über Steuerkanäle (19) od. dgl. die Kühlmittelzuleitung (14) bzw. den kühlmittelbeaufschlagten Zylinderraum (16a) in seiner kühlmittelseitigen Endlage an die Versorgungsbohrung (10) für die im Schließsinn druckmittelbetätigbare Lamellenkupplung (2) und in seiner druckmittelseitigen Endlage an die Versorgungsbohrung (11) für die im Öffnungssinn druckmittelbetätigbare Lamellenkupplung (3) anschließt.

2. Kupplungsvorrichtung nach Anspruch 1, dadurch gekennzeichnet, daß eine stirnseitig offene Sackbohrung an einem Wellenende (9a) den Zylinderraum (16) bildet und die Druckmittelzuleitung (13) in eine Stirnkammer (17) des diesem Wellenende (9a) zugeordneten Wellenlagers (18) mündet.

## Claims

1. A coupling device (1) for a power-shift transmission, consisting of two multiple-disk couplings (2, 3), which are operable by pressure fluid and have disks supplied with a cooling fluid, wherein one (3) of said multiple-disk couplings opens against the force of a coupling spring (6) in response to a supply of pressure fluid, and the other (2) of said couplings closes against the force of a disengaging spring in response to a supply of pressure fluid, the multiple-disk couplings are mounted on a common drive shaft (9) and supply bores (10, 11) and a control device (12) associated with said supply bores are provided in the drive shaft (9) for a supply of pressure fluid and a cooling fluid through pressure fluid and cooling fluid supply bores (13, 14), characterized in that the drive shaft (9) comprises as a control device (12) provided adjacent to the supply lines (13, 14) for pressure fluid and cooling fluid a cylinder chamber (16a), which is adapted to be supplied with pressure fluid at one end (cylinder chamber [16]) and with cooling fluid at the other end and serves to receive a control piston (15), which is reciprocable between limiting stops, and via control passages (19) or the like of the control piston (15) the cooling fluid supply line (14) or the cylinder chamber (16a) which is supplied with cooling fluid is connected by said control piston to the supply bore (10) for that multiple-disk coupling (2) which is operable by pressure fluid in a closing sense when said control piston is in its end position on the cooling fluid side and is connected by said control piston to the supply bore (11) for that multiple-disk coupling (3) which is operable by pressure fluid in an opening sense when said control piston is in its end position on the pressure fluid side.

2. A coupling device according to claim 1, characterized in that a blind bore which is open at the end face at one end (9a) of the shaft constitutes the cylinder chamber (16) and the pressure fluid supply line (13) opens into an end chamber (17) of the shaft bearing (18) which is associated with that end (9a) of the shaft.

## Revendications

1. Unité d'embrayage (1) pour boîte de vitesses, constituée par deux embrayages à disques (2, 3) manoeuvrables par un fluide sous pression, à disques exposés à un liquide de refroidissement, dont l'un (3) de ces embrayages à disques s'ouvre par suite d'une alimentation en fluide sous pression contre la force d'un ressort d'embrayage (6) et l'autre (2) se ferme contre la force d'un ressort de débrayage, dans laquelle sont prévus, pour la fourniture de fluide sous pression et pour l'arrivée du liquide de refroidissement par des conduites d'arrivée du fluide de pression (13) et de liquide de refroidissement (14), aux embrayages à disques (2, 3) montés sur un arbre menant commun (9), des canaux d'arrivée (10, 11) et un dispositif de distribution pour ces derniers disposé dans l'arbre menant (9), caractérisée en ce que l'arbre menant (9) présente, en tant que dispositif de distribution (12), dans la région des conduites d'arrivée de fluide sous pression (13) et de liquide de refroidissement (14) une chambre cylindrique (16) pouvant être alimentée par une extrémité en fluide sous pression et une chambre cylindrique (16a) pouvant être alimentée par une autre extrémité en liquide de refroidissement, pour le montage d'un piston de distribution (15) déplaçable par courses alternées limitées par des butées qui, par l'intermédiaire de canaux de distribution (19) ou de moyens analogues, met en communication, à sa position extrême du côté du liquide de refroidissement, la conduite d'arrivée de liquide de refroidissement (14) et la chambre cylindrique (16a) alimentée en liquide de refroidissement avec le canal d'arrivée (10) pour l'embrayage à disques (2) manoeuvrable par le fluide sous pression dans le sens de la fermeture, et à sa position extrême du côté du fluide sous pression avec le canal d'arrivée (11) pour l'embrayage à disques (3) manoeuvrable par le fluide sous pression dans le sens de l'ouverture.

2. Unité d'embrayage selon la revendication 1, caractérisée en ce qu'un trou borgne ouvert du côté extrême forme dans une partie extrême (9a) de l'arbre la chambre cylindrique (16), et la conduite (13) d'arrivée du fluide sous pression – débouche dans une chambre extrême (17) du palier (18) de ladite partie extrême (9a) de l'arbre.

_FIG.1_

_FIG.2_

EP 0 307 389 B1